(19) Europäisches Patentamt / European Patent Office / Office européen des brevets

(11) **EP 3 186 613 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **15760087.5**

(22) Anmeldetag: **24.07.2015**

(51) Int Cl.:
*G01N 3/06* (2006.01)   *G01N 3/08* (2006.01)
*G01N 3/24* (2006.01)   *G01N 33/36* (2006.01)

(86) Internationale Anmeldenummer:
**PCT/EP2015/001532**

(87) Internationale Veröffentlichungsnummer:
**WO 2016/029985 (03.03.2016 Gazette 2016/09)**

(54) **BIAXIALE MESSVORRICHTUNG UND VERFAHREN ZUR BESTIMMUNG VON NORMAL- UND SCHUBSPANNUNGSKORRELIERTEN WERKSTOFFPARAMETERN**

BIAXIAL MEASURING DEVICE AND METHOD FOR DETERMINING NORMAL AND SHEAR STRESS-CORRELATED MATERIAL PARAMETERS

DISPOSITIF BIAXIAL DE MESURE ET PROCÉDÉ POUR LA DÉTERMINATION DE PARAMÈTRES DE MATÉRIAUX CORRÉLÉS AUX CONTRAINTES NORMALES ET AUX CONTRAINTES DE CISAILLEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2014 DE 102014112161**

(43) Veröffentlichungstag der Anmeldung:
**05.07.2017 Patentblatt 2017/27**

(73) Patentinhaber: **Karlsruher Institut für Technologie 76131 Karlsruhe (DE)**

(72) Erfinder:
• **HEINLEIN, Kai**
 **70188 Stuttgart (DE)**
• **MAGER, Arnold**
 **75217 Birkenfeld (DE)**
• **WAGNER, Rosemarie**
 **70563 Stuttgart (DE)**

(56) Entgegenhaltungen:
WO-A2-2014/115130    DE-A1- 10 305 683
DE-A1-102012 219 593    US-B1- 6 487 902

• QUAGLINI V ET AL: "Experimental characterization of orthotropic technical textiles under uniaxial and biaxial loading", COMPOSITES PART A: APPLIED SCIENCE AND MANUFACTURING, ELSEVIER SCIENCE PUBLISHERS B.V., AMSTERDAM, NL, Bd. 39, Nr. 8, 1. August 2008 (2008-08-01) , Seiten 1331-1342, XP023316709, ISSN: 1359-835X, DOI: 10.1016/J.COMPOSITESA.2007.07.008
• B. BRIDGENS ET AL: "Inter-laboratory comparison of biaxial tests for architectural textiles", THE JOURNAL OF THE TEXTILE INSTITUTE, Bd. 103, Nr. 7, 1. Juli 2012 (2012-07-01), Seiten 706-718, XP055225831, ISSN: 0040-5000, DOI: 10.1080/00405000.2011.602824

**Beschreibung**

Die Erfindung betrifft eine biaxiale Messvorrichtung und ein Verfahren zur Bestimmung von normal- und schubspannungskorrelierten Werkstoffparametern. Ferner betrifft die Erfindung eine Aufhängevorrichtung für eine ebene Probe in der Messvorrichtung sowie eine Messanordnung aus derselben Messvorrichtung und der Probe.

Aus dem Stand der Technik sind Vorrichtungen zum Erfassen von Werkstoffparametern in biegeweichen und ebenen Bauteilen unter beliebigen Spannungs- oder Verzerrungszuständen bekannt. Werkstoffparameter sind Parameter, die Aussagen u. a. über die linear-elastische Verformung eines Bauteils geben, so z. B. der Schubmodul als Materialkonstante oder der Elastizitätsmodul als Zusammenhang zwischen Spannung und Verzerrung bei der Verformung eines festen Körpers und linear elastischem Verhalten. Zur Bestimmung verschiedener Werkstoffparameter können Normal- und Schubspannungen an ebene Proben anlegt werden. Aus den gemessenen Daten können über bekannte Werkstoffgesetze die Werkstoffparameter errechnet werden. Die Werkstoffparameter sind laut dem orthotropen Werkstoffgesetz unabhängig voneinander, wobei für einen ebenen Spannungszustand und einen ebenen Verzerrungszustand eine Unabhängigkeit der Elastizitätsmoduli und der Querdehnung in die Orthotropie-Richtung vom Schubmodul gegeben ist. Um die Werkstoffparameter zu bestimmen, sind bisher drei Versuche mit unterschiedlichen Aufbauten erforderlich, wobei die Bestimmung der Querdehnung auf das lineare Werkstoffverhalten begrenzt ist. So ist zur Errechnung des Schubmoduls immer eine Überlagerung mit Normalspannungen erforderlich.

Scherversuche zur Bestimmung des Schubmoduls erfordern für biegeweiche Werkstoffe eine Vorspannung in Orthotropie-Richtung, um bei einer Scherbelastung Faltenbildung der Werkstoffprobe zu vermeiden. In der Regel werden sogenannte Scherrahmen verwendet, in denen die Probe mit Vorspannung eingebaut und der quadratische Scherrahmen über die die Diagonalen gezogen wird. Die Höhe der Vorspannung bedingt das Verformungsverhalten, d. h. je größer die Vorspannung, umso geringer fallen die Schubverzerrungen aus. Mittels von Wegaufnehmern oder optischen Messverfahren können die Verschiebungen der Probe gemessen werden.

Die Werkstoffparameter können auf diese Weise nur bei linearem Spannungs-Dehnungs-Verhalten bestimmt werden. Sobald das Verhalten nichtlinear wird, ist eine Bestimmung der Werkstoffparameter nicht mehr möglich bzw. sehr ungenau.

Die DE 10 2009 020 519 A1 beschreibt eine Vorrichtung zum Testen verschiedener Parameter von hochfesten flexiblen Textillaminatmaterialien. Es werden biaxiale Belastungen an eine Probe angelegt, wobei eine Kraft gemessen werden soll, bei der das Material versagt.

Aus der EP 2 570 791 A2 ist eine Vorrichtung zur Bestimmung der biaxialen Dehnungskennwerte einer Probe bekannt. Die Probe ist kreuzförmig und Spannung wird jeweils an den vier Armen der Probe angelegt. Ein Rahmen ist aus zueinander verschieblichen Rahmenteilen aufgebaut, in denen ein feststehendes und ein bewegliches Glied jeweils einer Zugprüfmaschine zugeordnet sind.

Die US 7 204 160 B1 beschreibt eine Vorrichtung, mit der ein beliebiger Spannungszustand auf eine kreuzförmige, ebene Probe mittels einer zylindrischen Testeinrichtung aufgebracht werden kann. Bei biegeweichen Proben mit hoher Querdehnung kommt es bei dieser Probe zu einer doppelt gekrümmten Oberfläche. Da es nicht bekannt ist, welchen Einfluss die doppelte Krümmung der Oberfläche auf die Werkstoffparameter hat, können die zusätzlichen Krümmungsanteile nicht herausgerechnet werden.

Aus der WO 2012/100 780 A1 ist ferner eine S-förmige biaxiale Messvorrichtung bekannt. Sie ist aus zwei Gabelsitzen zum Anlegen von Zugspannung und zwei gekurvten Armen aufgebaut. Die gekurvten Arme weisen eine Vielzahl an Probenhalterungen auf, die eine zentral angeordnete Probe haltern.

Quaglini V. et al. "Experimental characterization of orthotropic technical textiles under uniaxial and biaxial loading" in Composites: Part A 39 (2008) 1331-142 offenbart den Oberbegriff der unabhängigen Ansprüche 1 und 5.

Zur Bestimmung der Querdehnung muss das Spannungs-Dehnungs-Verhalten linear sein. Für nichtlineares Werkstoffverhalten aber, wie es insbesondere bei großen Verzerrungen, d. h. größer als 10 %, der Fall ist, fehlt es an einer Grundlage, die geometrischen nichtlinearen Anteile von den elastischen Anteilen insbesondere bei einer Scherbeanspruchung zu trennen.

Das orthotrope Werkstoffgesetz für Belastungen in Orthotropie-Richtung geht von einer Unabhängigkeit der Normalverzerrungen von den Schubverzerrungen aus. Bei biegeweichen Werkstoffen ist eine faltenfreie Schubbeanspruchung nur möglich, wenn diese mit einem Normalspannungszustand überlagert wird. Für Verbundwerkstoffe mit einer Schubsteifigkeit müssen bei nicht fadenparalleler Belastung, also einer Belastung, die nicht entlang einer (Haupt-)Faserführung des Verbundwerkstoffes anliegt, die E-Module über die Zerlegung der Spannungskomponenten in Fadenrichtung bestimmt werden. Für Werkstoffe mit einer geringen Schubsteifigkeit führt eine solche nichtparallele Belastung zu einer internen Verdrehung und bekannte Werkstoffgesetze, insbesondere für Verbundwerkstoffe sind nur eingeschränkt gültig. Die Werkstoffparameter können dann nur unzureichend bzw. für kleine Verzerrungen (bei denen das Verhalten noch linear ist) bestimmt werden.

Ausgehend von diesem Stand der Technik ist es Aufgabe der vorliegenden Erfindung, ein Verfahren zur Bestimmung von normal- und schubspannungskorrelierten Werkstoffparametern zu schaffen, mit dem über die gemessenen Verzerrungen die Werkstoffparameter auch in nichtlinearen Verzerrungsbereichen ermittelt werden können.

Diese Aufgabe wird durch das Verfahren mit den Merkmalen des Anspruchs 1 gelöst.

Die weitere Aufgabe, einen beliebigen, aber definierten Kraft- oder Verzerrungszustand in eine ebene Probe anzulegen, wird durch die biaxiale Messvorrichtung mit den Merkmalen des unabhängigen Anspruchs 5 gelöst.

Ferner liegt der vorliegenden Erfindung die Aufgabe zugrunde, eine Probe fest und sicher aufzuhängen, so dass die Probe faltenfrei in die Messvorrichtung eingespannt werden kann. Dies wird durch eine Messvorrichtung mit den Merkmalen des Unteranspruchs 11 gelöst.

Die Aufgabe, eine Möglichkeit zu schaffen, biege- und schubweiche Materialien im Bereich der nichtlinearen Verzerrungen zu vermessen, wird durch eine Messanordnung mit den Merkmalen des Anspruchs 13 gelöst.

Weiterbildungen bzw. bevorzugte Ausführungsformen des Verfahrens, der biaxialen Messvorrichtung, der Aufhängevorrichtung und der Messanordnung sind in den Unteransprüchen ausgeführt.

Ein erfindungsgemäßes Verfahren zur Bestimmung von normal- und schubspannungskorrelierten Werkstoffparametern verwendet eine biaxiale Messvorrichtung, die einen Rahmen zum Einspannen einer ebenen Probe eines biege- und schubweichen Werkstoffs an vier Seiten und eine Vielzahl an Antrieben zur Aufbringung von Schub- und Scherspannungen auf die Probe hat. Die biaxiale Messvorrichtung weist ferner eine optische Messeinrichtung auf, die mit einer Datenverarbeitungseinheit operativ gekoppelt ist. Jeder Antrieb ist nur an einer der vier Seiten mit der Probe gekoppelt.

Das Verfahren umfasst in einem ersten Schritt a), dass ein vordefiniertes Zeichenraster auf der ebenen Probe aufgebracht wird, dessen Ausrichtung entweder mit regelmäßigen Abständen zu der Orthotropie-Richtungen der Probe korreliert oder unregelmäßig ist. Die Probe wird entsprechend ihrer Orthotropie-Richtungen in den Rahmen eingespannt. Die Orthotropie in der linearen Elastizitätstheorie lässt sich definieren als ein Spezialfall der Anisotropie, bei dem die Steifigkeits- oder Nachgiebigkeitsmatrix eine besonders einfache Form annimmt (neun Konstanten anstelle von einundzwanzig Konstanten im allgemeinen Fall).

In einem nächsten Schritt b) wird mittels der optischen Messeinrichtung ein erster Datensatz erfasst, der die erste Position des Zeichenrasters beschreibt, und die erfassten Daten an die Datenverarbeitungseinheit gesendet. Hiernach werden vorbestimmte Normal- und Schubspannungen an die Probe mittels der Vielzahl an Antrieben gleichzeitig angelegt, wodurch die Probe in einen verformten Zustand überführt wird und die Position des Zeichenrasters geändert wird (Schritt c)).

In Schritt d) wird mittels der optischen Messeinrichtung ein zweiter Datensatz erfasst, der die zweite Position des Zeichenrasters beschreibt, und der zweite Datensatz an die Datenverarbeitungseinheit gesendet. Es folgt das Bestimmen einer relativen Positionsänderung des Zeichenrasters durch Korrelieren der erfassten ersten und zweiten Datensätze in einem Schritt e).

Hieraus werden mittels der Datenverarbeitungseinheit Verzerrungen und ein aktueller Dehnungszustand der Probe bestimmt. In einem Schritt f) wird aus den Verschiebung und dem aktuellen Verzerrungszustand der Probe ein Verformungsgleichgewicht des verformten Zustands der Probe bestimmt, wobei das Verformungsgleichgewicht mit den Werkstoffparametern korreliert. Danach werden aus dem Verformungsgleichgewicht die Werkstoffparameter berechnet und ausgegeben (Schritt g)).

Die Probe ist an jeder der vier Seiten mit jeweils mehreren der Antriebe gekoppelt (Schritt h)). In Schritt c) sind die Antriebe am Rahmen auf jeder der vier Seiten voneinander getrennt verschiebbar, wobei die Probe nicht nur in zwei Richtungen gedehnt, sondern gleichzeitig auch in eine symmetrischen Verrautung oder einem unsymmetrischen Verzerrungszustand überführt wird.

Mittels des erfindungsgemäßen Verfahrens können an einer Probe und in einem Versuch E-Moduli, Querdehnung und das Schubmodul des zu prüfenden Werkstoffs ermittelt werden. Die Bestimmung der Werkstoffparameter gilt sowohl für eine Belastung in Orthotropie-Richtung als auch für Belastungen unter 45° für nicht-lineares Verhalten und beliebige Verzerrungen.

Eine anzulegende Vorspannung kann in einem Bereich zwischen 0 kN/m und 100 kN/m liegen, wobei die obere Grenze nur die derzeit mit der Messeinrichtung maximal aufbringbare Spannung angibt und nicht durch den Zahlenwert beschränkt ist. Die Werkstoffkennwerte können für die E-Moduli bezogen auf die Dicke der Proben bspw. zwischen 100 kN/m und 1000 kN/m für Folien und 500 kN/m bis zu 5000 kN/m für beschichtete Gewebe liegen. Es können jedoch auch Werkstoffkennwerte mit niedrigeren oder auch höheren E-Moduli vermessen werden.

Bevorzugt sieht die Erfindung vor, dass die Schritte b) bis f) des vorgenannten Verfahrensablaufs wiederholt ausgeführt werden, wobei bei jeder Wiederholung die anzulegenden Normal- und Schubspannung verändert, d.h. erhöht oder verringert wird. Diese Änderung kann schrittweise in sogenannten Belastungsschritten erfolgen, wobei durch stetes Erhöhen der Spannung um einen bestimmten Wert eine konstante Verzerrungsgeschwindigkeit erreicht werden kann.

Die Werkstoffparameter können in einer bevorzugten Ausführungsform der Auswertung wie folgt berechnet werden:

Erfindungsgemäß werden zum Bestimmen der ersten bzw. zweiten Position des Zeichenrasters Abstände zwischen drei vorbestimmten Punkten des Zeichenrasters erfasst, wobei die Punkte des Zeichenrasters (gedanklich) mit Linien verbunden werden können und Winkel zwischen den Linien der Punkte des Zeichenrasters zu einer vorbestimmten X- und Y-Achse der Messvorrichtung bestimmt werden können. Die Strecken sowie die Winkel bilden einen Datensatz, der weiterverarbeitet werden kann.

Eine X- bzw. Y-Achse kann durch die Messvorrichtung bzw. den Rahmen und die Messtechnik vorgegeben bzw. selbst definiert werden. Mittels der optischen Messeinrichtung können Punkte des Zeichenrasters bestimmt und deren Position in X- und Y-Richtung errechnet werden, wobei die exakten geometrischen Bedingungen der Probe verwendet werden können.

Erfindungsgemäß wird also die Verschiebung des Zeichenrasters auf der Probe gemessen und die Änderung der Abstände benachbarter Punkte über folgende funktionale Zusammenhänge in die Verzerrungen umgerechnet. Ausgangsgrößen sind dabei die gemessenen Abstände zwischen den Punkten $P_1$ und $P_2$ sowie $P_1$ und $P_3$ des Zeichenrasters, die beliebig zueinander liegen und die Winkel $\alpha_x$ und $\alpha_y$ der Strecken zu einer vorbestimmten X- und Y-Achse des Rahmens einschließen. Diese Strecken sind mit den bekannten X- und Y-Richtungen in orthogonale Komponenten $a_x$ und $a_y$ umzurechnen und den Abständen in X- und Y-Richtung zwischen jeweils zwei Punkten ($P_1$ zu $P_2$ und $P_1$ zu $P_3$) entsprechen. In jedem Belastungsschritt wird die Verschiebung der Zeichenpunkte des Zeichenrasters in die X- und Y-Richtung gemessen, wonach mit den Differenzen der Verschiebungen ($u_2$, $u_3$ Verschiebung der Punkte $P_2$ und $P_3$ in X-Richtung sowie $v_2$, $v_3$ Verschiebung der Punkte $P_2$ und $P_3$ entsprechend in Y-Richtung) dieser Punkte Verzerrungen bzw. Verzerrungsparameter $\varepsilon_{11}$, $\varepsilon_{22}$ und $\gamma_{12}$ für beliebige Verschiebungen bestimmt werden können:

$$\varepsilon_{11} = \frac{1}{a_x}\sqrt{(a_x + u_2 - u_1)^2 + (v_2 - v_1)^2} - 1$$

$$\varepsilon_{22} = \frac{1}{a_y}\sqrt{(a_y + v_3 - v_2)^2 + (u_3 - u_2)^2} - 1$$

$$\alpha_x = \arctan\frac{v_2 - v_1}{a_x + u_2 - u_1}$$

$$\alpha_y = \arctan\frac{u_3 - u_2}{a_y + v_3 - v_2}$$

$$\gamma_{12} = \alpha_x + \alpha_y$$

Aus den genannten Verzerrungen und den (ggfs. ungedehnten oder bereits vorgedehnten) Längen $a_x$ und $a_y$ lassen sich gedehnte Längen $a_1$ und $a_2$ zu

$$a_1 = a_x \cdot (1 + \varepsilon_{11})$$

$$a_2 = a_y \cdot (1 + \varepsilon_{22})$$

berechnen.

Im Folgenden können aufgebrachte Schubspannungen $\tau_{xy}$ und Nomralspannungen $\sigma_{xx}$, $\sigma_{yy}$ dazu genutzt werden, die Spannungen innerhalb des Werkstoffs zu bestimmen, wobei ein für die Orthotropie-Richtungen konstanter Spannungszustand in einem Messfeld (das durch die Probengröße bestimmt werden kann) angesetzt werden. Es wird damit ein Verformungsgleichgewicht definiert, das mit den Werkstoffparametern korreliert. Auf Grund der Vorspannung der Probe, um Falten in Normal- bzw. Schubversuchen zu vermeiden, können Anteile der geometrischen Steifigkeit infolge einwirkender Normalspannungen auf die Schubverzerrung heraus gerechnet werden, um als einen reinen Werkstoffparameter den Schubmodul bestimmen zu können, ohne einen Einfluss durch die versteifende Wirkung der Vorspannung zu berücksichtigen. Für diesen Ansatz wird ein Gleichgewicht im verformten Zustand bezogen auf aktuellen Verzerrungszustand bestimmt (auch Verformungsgleichgewicht genannt). Die Besonderheit ist, dass sich die Orthotropie-Richtungen in schubweichen Werkstoffen mitdrehen und die Spannungen im verformten Zustand in Richtung der gedrehten Orthotropie-Achsen wirken.

Zur Berechnung der Werkstoffspannungen im verformten Zustand können ferner die folgenden funktionalen Zusammenhänge genutzt werden:

$$\sigma_{11} = \frac{a_y}{a_2} \cdot \frac{\sigma_{xx} \cdot \cos\alpha_y - \tau_{xy} \cdot \sin\alpha_y}{\cos\gamma_{12}}$$

$$\sigma_{22} = \frac{a_x}{a_1} \cdot \frac{\sigma_{yy} \cdot \cos\alpha_x - \tau_{xy} \cdot \sin\alpha_x}{\cos\gamma_{12}}$$

$$\tau_{12} = \frac{a_y}{a_2} \cdot \frac{-\sigma_{xx} \cdot \sin\alpha_x + \tau_{xy} \cdot \cos\alpha_x}{2\cos\gamma_{12}} + \frac{a_x}{a_1} \cdot \frac{-\sigma_{yy} \cdot \sin\alpha_y + \tau_{xy} \cdot \cos\alpha_y}{2\cos\gamma_{12}}$$

$$\alpha_x = \arctan\left(\frac{\sigma_{xx} \cdot a_x \cdot a_2 \cdot \sin\gamma_{12} - \tau_{xy} \cdot (a_x \cdot a_2 \cdot \cos\gamma_{12} - a_y \cdot a_1)}{\sigma_{xx} \cdot a_y \cdot a_1 + \sigma_{yy} \cdot a_x \cdot a_2 \cdot \cos\gamma_{12} + \tau_{xy} \cdot a_x \cdot a_2 \cdot \sin\gamma_{12}}\right)$$

Für das Verformungsgleichgewicht des Werkstoffs im verformten Zustand kann damit bezogen auf die Orthotropie-Richtungen für einen ebenen Verzerrungszustand nun der folgende Zusammenhang aufgestellt werden, woraus die noch unbekannten Werkstoffparameter (Hier mit $E_{1111}$, $E_{2222}$, $E_{1122}$, $E_{2211}$ und $E_{1212}$ bezeichnet) berechnet werden können, wobei aus Symmetriegründen $E_{1122} = E_{2211}$ gilt:

$$\begin{bmatrix} \sigma_{11} \\ \sigma_{22} \\ \tau_{12} \end{bmatrix} = \begin{bmatrix} E_{1111} & E_{1122} & 0 \\ E_{1122} & E_{2222} & 0 \\ 0 & 0 & E_{1212} \end{bmatrix} \cdot \begin{bmatrix} \varepsilon_{11} \\ \varepsilon_{22} \\ \gamma_{12} \end{bmatrix}$$

Damit stehen zur Berechnung von 15 Größen auch 15 Gleichungen zur Verfügung, wobei die genannten Größen drei Verzerrungen des Werkstoffs im verformten Zustand $\varepsilon_{11}$, $\varepsilon_{22}$, $\gamma_{12}$, drei Spannungen in dem Verformungs-gleichgewicht $\sigma_{11}$, $\sigma_{22}$, $\tau_{12}$, die gedehnten Längen $a_1$, $a_2$, zwei Winkel der verdrehten Längen $\alpha_x$, $\alpha_y$, sowie die unbe-kannten Werkstoffparameter $E_{1111}$, $E_{2222}$, $E_{1122}$, $E_{2211}$ und $E_{1212}$ sind.

Die Spannungen und die geometrischen Größen können für jede Belastung wie oben beschrieben aus den angesetzten Kräften und gemessenen Verschiebungen oder angesetzten Verschiebungen und gemessenen Kräften berechnet werden. Damit können in jedem Lastschritt für einen beliebigen Spannungszustand die vier Werkstoffparameter bestimmt werden. Die beschriebene Art der Auswertung ermöglicht es, Spannungen bzw. Verzerrungen zur Bestimmung der Werkstoffparameter zu nutzen, wobei für die Umrechnung der gemessenen Verschiebung in die Verzerrungen die exakten geometrischen Bedingungen angesetzt werden.

In einem alternativen Ablauf des Verfahrens, kann ein solcher Versuch in zwei Schritten durchgeführt werden, wobei die Probe in Richtung der Orthotropie-Richtungen in die Versuchseinrichtung eingespannt, auf einen vorgegebenen Wert gedehnt und anschließend verrautet wird. Durch die Verrautung der Probe ergeben sich die obigen geometrische Bestimmungsgleichungen, die es ermöglichen, auch ohne Schubsteifigkeit die E-Moduli und die Querdehnung aus den Größen, die gemessen bzw. angelegt werden, zu berechnen. Vorteilhaft können somit Werkstoffe untersucht werden, die keine und nur eine sehr geringe Schubsteifigkeit haben und eine große Verdrehung der Orthotropie-Richtungen aufweisen, die keine und nur eine sehr geringe Querdehnung oder eine große Verdrehung aufweisen, bis hin zu Werkstoffen, in denen eine bestimmte Querdehnung und Schubsteifigkeit vorhanden ist.

Dabei können die Werkstoffparameter bei gleichzeitigem Aufbringen von Normal- und Schubspannungszuständen und großen Verzerrungen von geometrisch nichtlinearen Einflüssen eindeutig und klar getrennt werden.

Erfindungsgemäß können die in Schritt c) gleichzeitig angelegten Normal- und Schubspannungen zur Verformung der Probe im nicht-linearen Bereich liegen, wobei für nicht-lineare Bereiche Winkelverdrehungen angenommen werden, die insbesondere größer als 10° sind. Nicht-linear bedeutet im Sinne der Erfindung, dass die Spannungs-Dehnungskennlinie, deren Tangente dem E-Modul entspricht, eine andere Kurvenform als eine lineare Kurve annimmt. Dies tritt insbesondere auf, wenn der Unterschied zwischen Sekantenmodul und tatsächlichem E-Modul größer als 10 % wird.

Eine erfindungsgemäße biaxiale Messvorrichtung zur Verwendung des Verfahrens zur Bestimmung von normal- und schubspannungskorrelierten Werkstoffparametern weist einen Rahmen zum Einspannen einer ebenen Probe eines biege- und schubweichen Werkstoffs an vier Seiten und eine Vielzahl an Antrieben zum Aufbringen von Spannungen auf die eingespannte Probe auf. Jeder Antrieb ist nur an einer der vier Seiten mit der Probe gekoppelt. Der biaxialen Messvorrichtung ist eine optische Messeinrichtung zugeordnet, die mit einer Datenverarbeitungseinheit operativ gekoppelt ist. Erfindungsgemäß können mittels der Antriebe vorbestimmte Normal- und Schubspannungen in Bezug auf die Orthotropie-Richtungen gleichzeitig in normaler und paralleler Richtung an die eingespannte Probe angelegt werden. Die Probe ist an jeder der vier Seiten mit jeweils mehreren der Antriebe gekoppelt. Die Antriebe am Rahmen sind auf jeder der vier Seiten voneinander getrennt verschiebbar.

Vorteilhaft ist insbesondere, dass Normal- und Schubspannungszustände gleichzeitig auf die Probe aufgebracht werden können. Damit ist dann nur noch ein Versuch, anstatt bisher drei separate Versuche notwendig. Hierdurch kann eine Zeit- und Aufwandsersparnis bei gleichzeitig qualitativ hochwertigeren Ergebnissen erreicht werden. Auch ist es möglich neben symmetrischen Verrautungen der Probe auch unsymmetrische Verzerrungszustände herbeizuführen. Es können aus der im Wesentlichen quadratischen Probe beliebige Symmetrien und beliebige Vierecke erzeugt werden. Dies war im Stand der Technik, insbesondere bei Scherversuchen, bisher nicht möglich.

Der Rahmen der Vorrichtung kann aus mehreren Profilen aufgebaut sein, wobei er geschlossen oder offen ausgebildet sein kann. Bevorzugt kann eine Grundform des Rahmens quadratisch sein, wobei Rahmenteile aus Rechteckprofilen aufgebaut sein können. Andere Formen, wie sechseckige Rahmen sind ebenfalls möglich.

Die Erfindung kann ferner vorsehen, dass die Anzahl der Antriebe zumindest acht ist. Es können zwei oder mehr Antriebe entlang einer Seitenkante des Rahmens angeordnet sein. Dabei können einer oder mehr der zumindest zwei Antriebe zur Erzeugung einer Normalspannung sein und zumindest ein weiterer Antrieb zur Erzeugung einer Schubspannung sein.

Zum Anlegen einer gleichförmigen Normal- oder Schubspannung an die Probe entlang einer vorbestimmten Orthotrophie-Richtung können zwei oder mehr Antriebe vorgesehen sein, die an voneinander abgewandten Seiten des Rahmens angeordnet sein können. Die Probe kann dadurch gleichmäßig unter Zug und die Probe in eine entsprechende Verrautung gebracht werden. Die Vielzahl der Antriebe und die Lagerung der Probe sind vorteilhaft voneinander getrennt, wodurch ein ungehinderter Verformungszustand der Probe bei nur acht Antrieben erreicht werden kann.

Mittels der erfindungsgemäß angeordneten Antriebe kann ein beliebiger Spannungszustand in die Probe eingetragen werden, indem bevorzugt zwei Antriebe normal an den Kanten der Proben angreifen und jeweils zwei Antriebe an zwei gegenüberliegenden Ecken der Probe zur Verrautung der Probe führen.

Ferner kann es vorgesehen sein, dass innerhalb des Rahmens eine Schiene angeordnet ist, in der ein Kantenabschnitt der Probe linear verschiebbar gelagert sein kann. Die Antriebe können dadurch, durch die bedingte Verzerrung der Probe bei Anlegen einer entsprechenden Spannung, sich entlang der Schiene bewegen und eine gleichförmige Verzerrung aufrechterhalten.

Auch kann die Erfindung vorsehen, dass die Messvorrichtung eine Aufhängevorrichtung mit einer Vielzahl an Laufschlitten aufweist, die mit dem Kantenabschnitt der Probe verbunden werden können. Dadurch kann eine gewünschte Vorspannung sicher und dauerhaft an die Probe angelegt werden.

Durch die Befestigung der Probe an Schienen, die eine Verschiebung der Probenkanten parallel zu den Rändern zulässt, kann auf eine aufwändige Fertigung von Kreuzproben mit zusätzlichen Laschen verzichtet werden, die notwendig sind, um eine ungehinderte Querdehnung zu zulassen.

Ferner sieht die Erfindung vor, dass die optische Messeinrichtung einen oder mehrere optische(n) Sensor(en) zum Erfassen des Zeichenrasters der Probe aufweisen kann. Damit kann eine berührungslose Messung der Probenverzerrung erfolgen.

Die Messvorrichtung kann eine oder mehrere Steuer- und Regelungseinheit(en) aufweisen, die mit der Vielzahl an Antrieben steuernd bzw. auch regelnd gekoppelt sein kann, wobei die Steuer- und Regelungseinheit(en) mit der Datenverarbeitungseinheit operativ gekoppelt ist/sind. Die Verzerrung der Probe kann somit einfach schrittweise angepasst werden. Dabei können drei Verformungsvarianten der Probe erreicht werden: Bei einer weggesteuerten Verformung wird eine vorgegebene Geschwindigkeit in mm/min, bei konstantem Verschiebungsweg und gleichzeitiger Kraftmessung realisiert, wobei das zu erfassende Messsignal ein zu fahrender Weg der Antriebe sein kann. Bei einer kraftgesteuerten Verformung kann die Kraft in X- bzw. Y-Richtung getrennt vorgegeben werden und als Messsignal die Kraft der Kraftsensoren genutzt werden. Bevorzugt kann auch die Verformungsvariante "Echtzeit gesteuert" gewählt werden, wobei eine eingetragene Verschiebung anhand der Probenverformung bestimmt wird. Dies bedeutet eine konstante Probenverformung jeweils in eine Richtung. Eine Steuerung kann über die Auswertung der optischen Messergebnisse erfolgen. Das Messsignal bedeutet dabei eine Weg bzw. die Verzerrung der Probe in Abhängigkeit der Auswertung der optischen Messung.

Erfindungsgemäß ist eine Messvorrichtung mit einer oder mehreren Aufhängevorrichtung(en) für eine ebene Probe vorgesehen. Dabei weist die Aufhängevorrichtung drei oder mehr Laufschlitten auf, die mit einem Kantenabschnitt der Probe verbunden werden können. Erfindungsgemäß sind zwei oder mehr der drei oder mehr Laufschlitten auf einer Laufschiene beweglich gelagert. Ferner ist/sind einer oder mehrere der Laufschlitten mit der Laufschiene fest und unbeweglich verbunden. Bevorzugt können drei Aufhängevorrichtungen an jeder Seite vorgesehen sein, so dass für jeden Antrieb eine Aufhängevorrichtung vorliegt. So können bevorzugt zwei Aufhängevorrichtungen für Normalspannungen und eine Aufhängevorrichtung zur Erzeugung einer Schubspannung an der Probe vorliegen.

Die Aufhängevorrichtung ist mit den Antrieben über Zugelemente als Verbindungseinrichtung verbunden. Diese Elemente können dabei Seile, Drähte, Gewindestangen oder auch Stäbe sein. Je nach Anwendung und aufzubringender Spannung kann ein passendes Zugelement gewählt werden.

Vorteilhaft müssen keine kreuzförmigen Proben mit speziellen Laschen zur Aufhängung mehr hergestellt werden. Es können einfache, ebene Probenstücke genutzt werden, wodurch Kosten in der Probenherstellung eingespart werden können.

Die Aufhängevorrichtung kann einen Keder fassen, um den ein Kantenabschnitt der Probe gelegt werden kann, und wobei der Keder mit einem Befestigungsabschnitt der Probe unlösbar verbunden werden kann. Der Befestigungsabschnitt kann dabei insbesondere verschweißt, verklebt oder vernäht werden. Der Keder kann ein Seil oder auch ein biegsamer oder fester Stab oder eine Stange sein. Die Aufhängevorrichtung kann drei oder mehr Kederprofilblöcke aufweisen, die jeweils eine Ausnehmung aufweisen, in der der Keder, der ummantelt werden kann, zumindest abschnittsweise aufnehmbar ist. Dabei können die Kederprofilblöcke mit den zumindest drei Laufschlitten verbunden werden. Die Probe kann dadurch einfach eingehängt werden und benötigt seine separaten Laschen oder dergleichen. Die Aufhängevorrichtung erfordert eine hohe Steifigkeit und ermöglicht eine gleichmäßige Verteilung der Zugspannung auf die Probe.

Eine erfindungsgemäße Messanordnung umfasst eine Messvorrichtung, wie sie zuvor beschrieben wurde, und eine ebene Probe eines biege- und schubweichen Werkstoffs. Dabei weist die Probe, die in die Messvorrichtung eingespannt werden kann, bevorzugt eine ebene Geometrie auf. Ferner kann die Probe ein auf der Oberfläche vorbestimmtes Zeichenraster zur optischen Erfassung von Verzerrungen aufgrund anlegbarer Normal- und Schubspannungen aus optisch erfassbaren Punkten aufweisen.

Für das Zeichenraster können bevorzugt Punkte vorgesehen sein, da sie wohl definierte Abmessungen haben und dadurch besser durch die optische Messeinrichtung erfasst werden können. Generell sind auch andere geometrisch einfache Formen möglich, wie z. B. Kreuze, Quadrate oder Dreiecke. Das Zeichenraster selbst kann symmetrisch bzw. regelmäßig, d. h. aus äquidistant zueinander angeordneten Punkten aufgebaut sein und bspw. mit den Orthotropierichtungen der Probe korrelieren. Ferner kann das Zeichenraster aber auch unabhängig einer Probensymmetrie in beliebiger Weise aufgebracht sein.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:

**Fig. 1** eine schematische Ansicht einer erfindungsgemäßen Messevorrichtung mit unbelasteter Probe,

**Fig. 2** eine schematische Ansicht der Messvorrichtung mit eingespannter Probe in belastetem Zustand,

**Fig. 3** eine schematische Ansicht der Messvorrichtung mit eingespannter Probe in einem weiteren belasteten Zustand und

**Fig. 4** eine Detailansicht einer erfindungsgemäßen Aufhängevorrichtung.

Die erfindungsgemäße Vorrichtung bezieht sich insbesondere auf eine Messvorrichtung zur Bestimmung von Normal - bzw. Schubspannung korrelierten Werkstoffparametern schub- und biegeweicher Werkstoffe.

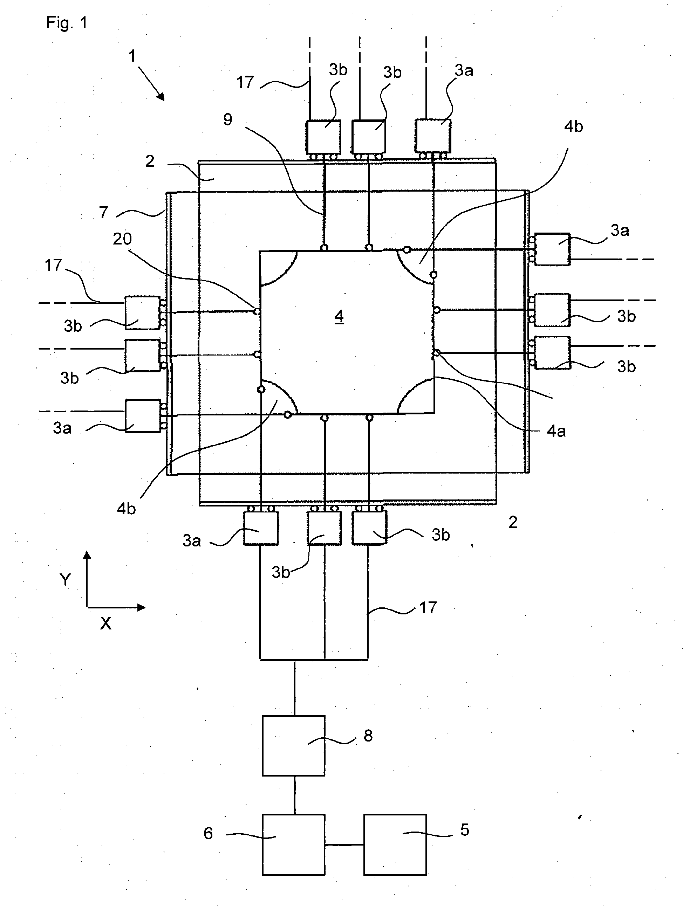

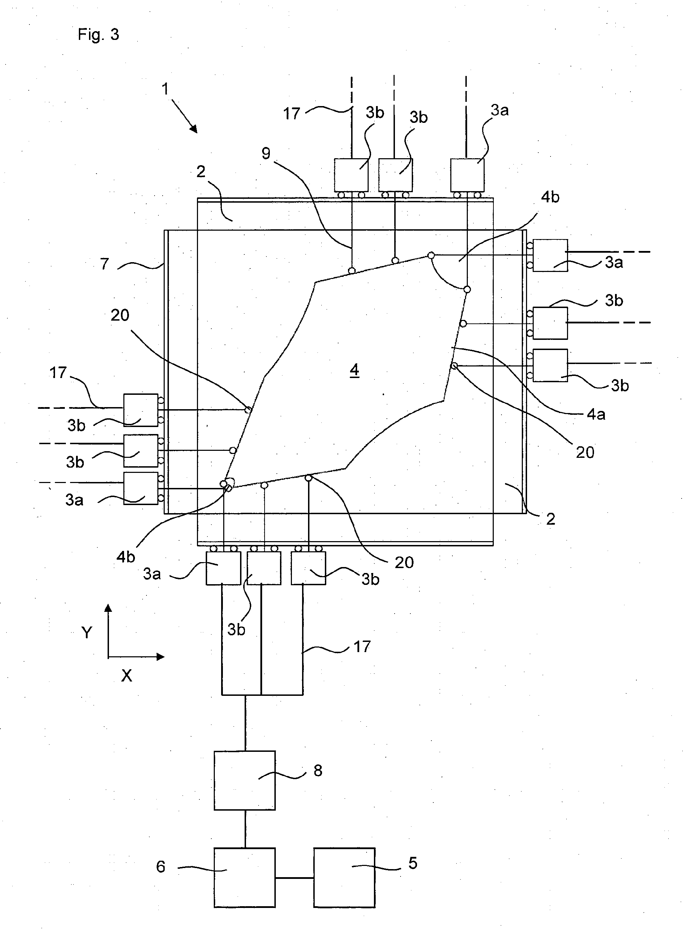

**Fig. 1** zeigt eine erfindungsgemäße Messvorrichtung 1 mit einem quadratischen Rahmen 2 aus im Wesentlichen vier linearen Rahmenteilen auf. An den Rahmenteilen sind jeweils an der Außenseite des Rahmens 2 Schienen 7 angeordnet. Antriebe 3a, 3b sind vorgesehen, die in die Schienen 7 mittels Verbindungvorrichtungen 9, hier Seilen als Zugelemente oder andern Zug- bzw. Schubvorrichtungen wie etwa Stäben oder Stangen oder auch einer klemmenden Aufhängevorrichtung eingreifen. Die Aufhängevorrichtung wiederum hat eine Führung bzw. Laufschiene (siehe **Fig. 3**), die mit einer Probe 4 verbunden ist. Die Probe 4 ist im Wesentlichen eben und quadratisch. In **Fig. 1** ist die Probe 4 in einem eingespannten, aber noch unbelasteten Zustand dargestellt.

Die Rahmenteile des Rahmens 2 können aus zwei übereinanderliegenden Rechteck-Hohlprofilen aufgebaut sein. Die Zweiteiligkeit der Rahmenteile ist erforderlich, damit die Antriebe 3a, 3b mit ihren Längsachsen an die Mittelfläche der quadratischen Probe 4 angeordnet werden können um eine Verdrehung der Probe aus der Probenebene zu verhindern. Die ideale (Proben-)Ebene, in der die Probe während der Messung zu liegen hat, wird dabei durch die Ebene definiert, die durch die Achsen der Antriebe zueinander gebildet wird. Dabei ist der Rahmen 2 derart bemessen, dass eine Verrautung der Probe 4 um 45° möglich ist. In **Fig. 1** sind entlang jeder der 4 Seiten des Rahmens 2 drei Antriebe 3a, 3b angeordnet.

Die Antriebe 3a, 3b teilen sich unterschiedliche Arten von Antrieben. Dabei sind jeweils 2 der drei Antriebe, z. B. Spindelantriebe 3b speziell für eine Normalbelastung. Der dritte Antrieb ist z. B. ein Spindelantrieb 3a zur Erzeugung einer Schubbelastung an der Probe 4. Sichtbar wird dies auch an den Verbindungsvorrichtungen 9, mit denen die Spindelantriebe 3b für die Schubbelastung jeweils in einem mittleren Abschnitt einer Seitenkante 4a angreifen. Die Spindelantriebe 3a, die eine Schubbelastung erzeugen sollen, sind an zwei Eckabschnitten 4b der Probe 4 befestigt. Die Spindelantriebe 3a, 3b sind am Rahmen 2 parallel zu den Rahmenteilen bzw. -profilen verschiebbar gelagert und können sich um eine Z-Achse drehen.

Ferner sind alle Antriebe 3a, 3b mittels elektrischer Verbindungen 17 mit einer Mess- und Regelungseinheit 8 verbunden, die Steuerung und Regelung der Antriebe 3a, 3b übernimmt. Zur besseren Übersicht sind exemplarisch Verbindungen 17 zwischen den Komponenten in einem in **Fig. 1** unteren Bereich gezeigt, die Verbindungen 17 bzw. deren Abschnitte links, rechts sowie oberhalb des Rahmens 2 sind in **Fig. 1** nur gestrichelt dargestellt. Auch sie sind mit der Mess- und Regelungseinheit 8 in operativer Weise gekoppelt. Es können auch für jeden Spindelantrieb 3a, 3b eigene Mess- und Regelungseinheiten vorgesehen sein, auch eine Teilung in Mess- und Regelungseinheiten, um getrennt Schub- bzw. die Scherspannung zu kontrollieren, können vorgesehen sein.

Ferner weist die Messvorrichtung 1 eine Datenverarbeitungseinheit 6 auf, die ein handelsüblicher PC oder mit einem solchen verbunden sein kann. Mit der Datenverarbeitungseinheit 6 operativ gekoppelt ist weiterhin eine optische Messvorrichtung 5, die schematisch in **Fig. 1** dargestellt ist. Die Probe 4 kann ein Zeichenraster, bevorzugt ein Punktraster, aufweisen, das zur optischen Erkennung dient. Damit dieses Zeichenraster optisch erkannt werden kann, ist die optische Messevorrichtung 5, insbesondere ein optischer Sensor oberhalb der Messevorrichtung 1 bzw. oberhalb der Probe 4 in geeigneter höher angeordnet. Je nach Aufbau der Messevorrichtung 1 kann der optische Sensor 5 auch unterhalb der Probe angeordnet sein. Unterhalb heißt hier bei unterhalb einer sich in X-Y-Richtung erstreckenden Fläche der Probe. Eine X-Y-Ausrichtung wird dabei von der Geometrie des Rahmens 2 vorgegeben. Der Nullpunkt wird in einer Ecke gewählt, so z. B. eine linke untere Ecke des Rahmens 2.

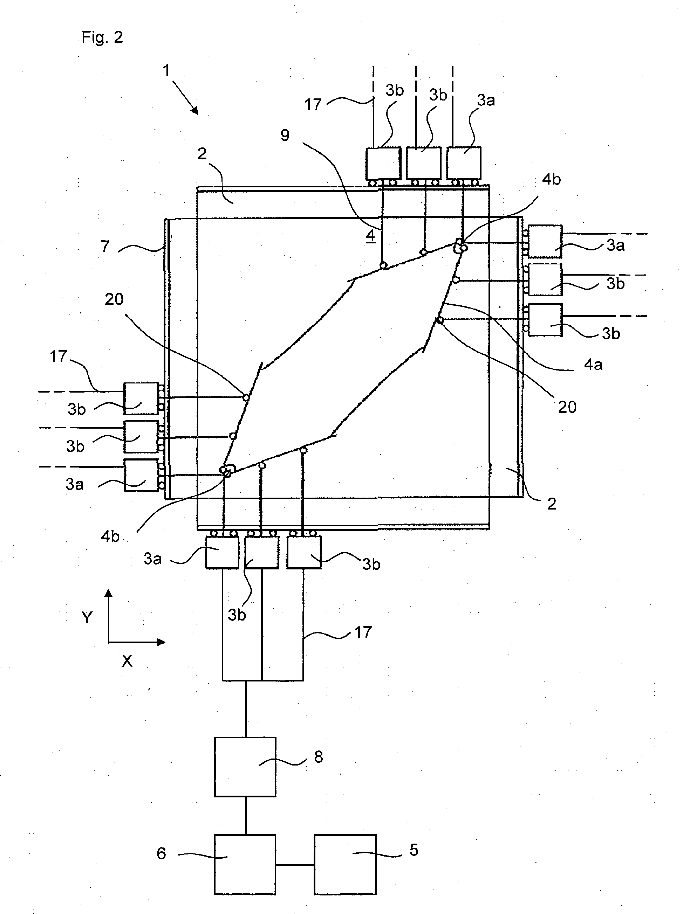

In **Fig. 2** ist die gleiche Vorrichtung 1 gezeigt, wobei die Spindelantriebe 3a,3b nun so angetrieben wurden, dass sie jeweils eine Scher-bzw. Schubspannung an der Probe 4 erzeugt haben. Dabei verkürzen sich die Zugelemente der Verbindungsvorrichtung 9 und die Spindelantriebe 3a, 3b wandern entlang der Schienen. Die quadratische Probe 4 wird bei zunehmender Spannung verrautet. Die Abmessungen des Rahmens 2 sind dabei so gewählt, dass eine Probe mit entsprechenden Abmessungen von in etwa 60 cm x 60 cm Größe um bis zu 45° verrautet werden.

Die **Fig. 3** zeigt die gleiche Messvorrichtung 1 wie in den vorherigen Figuren, jedoch wurden die Spindelantriebe 3a, 3b derart angetrieben, dass die quadratische Probe 4 diesmal nicht symmetrisch verrautet, sondern unsymmetrisch unter Spannung gesetzt ist. Ein erster Bereich (linke untere Ecke des Rahmens 2 in der **Fig. 3**) ist dabei stärker verrautet, als ein zweiter Bereich (rechte obere Ecke des Rahmens 2 in der **Fig. 3**). Hierdurch können Spannungen unterschiedlicher Größe an der Probe 4 angelegt werden, die sich bisher im Labor nicht realisiert werden konnten.

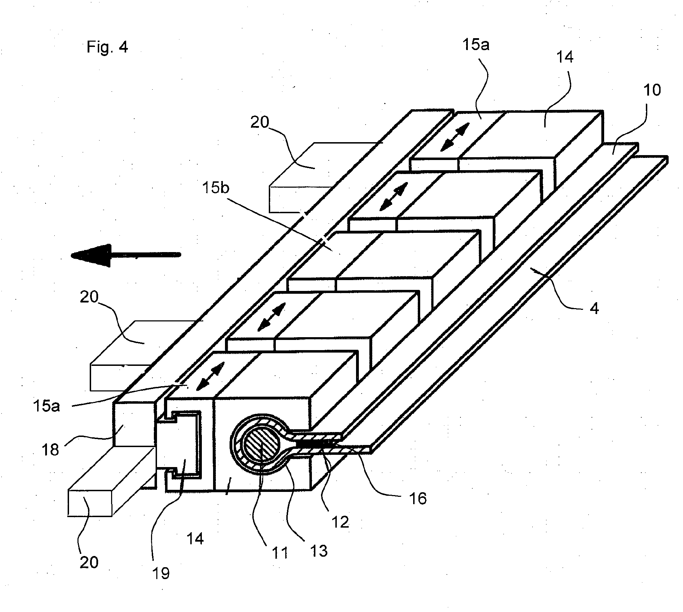

Um eine feste Aufhängung der Probe 4 zu erreichen, gerade um Spannungen im nichtlinearen Bereich wie in diesem Fall herzustellen, ist es erforderlich, dass eine spezielle Aufhängung vorgesehen ist. Dazu zeigt **Fig. 4** eine Detailansicht einer an Kanten der Probe 4 befestigbaren Aufhängevorrichtung. Jeweils eine Aufhängevorrichtung ist vorgesehen, die einen Kantenabschnitt 10 der Probe 4 auf eine bestimmte Weise greift.

Der Kantenabschnitt 10 der Probe 4 ist in **Fig. 4** um einen Keder 11 herum gelegt und überlappt mit einem Befestigungsabschnitt 12 der Probe 4. Der Kantenabschnitt 10 und der Befestigungsabschnitt 12 sind mittels einer Befestigungsnaht bzw. einer Schweißnaht 16 fest miteinander verbunden. Der mit einem Teil der Probe 4 umfasste Keder 11 ist in fünf Kederprofilblöcken 14 aufgenommen. Die Kederprofilblöcke 14 weisen dazu geeignete Ausnehmungen 13 auf. Die Form dieser Ausnehmungen 13 entspricht dabei zumindest dem Durchmesser des Keders 11 plus einer doppelten Dicke der Probe 4. Damit sitzt die Probe fest und wird sicher gehalten. Die Kederprofilblöcke 14 sind ferner mit Laufschlitten 15a, 15b fest verbunden, die auf einer Laufschiene 19 aufsetzen. Dabei ist an der Aufhängevorrichtung vorgesehen, dass ein mittlerer Laufschlitten 15b fest mit der Laufschiene 19 verbunden ist, wobei die vier weiteren Laufschlitten 15a links und rechts des mittleren Laufschlittens 15b auf der Laufschiene 19 beweglich gelagert sind. Die Laufschiene 19 ist dabei auf einer Aufnahme 18 gelagert, die die Laufschiene 19 in Position hält. Die Aufnahme 18 ist ferner mit einer Verbindungsvorrichtung 20 festgebunden, wobei die Verbindungsvorrichtung 20 in direkter Verlängerung zu dem festen Laufschlitten 15b an der Aufnahme 18 angeordnet ist und mit der Verbindungsvorrichtung 9 des jeweiligen Antriebs 3a, 3b verbindet.

Ein schwarzer Pfeil in Richtung linker Seite der **Fig. 4** verdeutlicht, dass es sich hierbei um eine Zugkraft in diese Richtung handelt, die aufgebracht werden soll. Der Vorteil dieser Art der Aufhängung ist insbesondere, dass eine Zugkraft auf die Probe 4 übertragen werden kann, ohne eine weitere Querverbindung herstellen zu müssen. Es wird ein Rutschen der Probe 4 in Zugrichtung vermieden, und somit die Zugkraft durch die Halterung des Keders 11 aufrechterhalten. Mittels der beweglichen Laufschlitten 15a kann eine gewisse Querausdehnung, d. h. eine gewünschte Vorspannung der Probe 4 erreicht werden. Die Probe 4 kann besser zentriert werden, wodurch die Zugkraft besser übertragen und verteilt wird.

Bezugszeichenliste

| | |
|---|---|
| 1 | Biaxiale Messvorrichtung |
| 2 | Rahmen |
| 3a, 3b | Antriebe |
| 4 | Probe |
| 4a | Seitenkante |
| 4b | Eckabschnitt |
| 5 | optische Messeinrichtung |
| 6 | Datenverarbeitungseinheit |
| 7 | Schiene |
| 8 | Zug- bzw. Schubvorrichtung |
| 9 | Verbindungsvorrichtung Antrieb, Zugelement |
| 10 | Kantenabschnitt |
| 11 | Keder |
| 12 | Befestigungsabschnitt |
| 13 | Ausnehmung |
| 14 | Kederprofilblock |
| 15a | beweglicher Laufschlitten |
| 15b | fester Laufschlitten |
| 16 | Schweißnaht |
| 17 | Elektrische Verbindung |
| 18 | Aufnahme |
| 19 | Laufschiene |
| 20 | Verbindungsvorrichtung / Aufhängevorrichtung |

**Patentansprüche**

1. Verfahren zur Bestimmung von Normal- und Schubspannungskorrelierten Werkstoffparametern unter Verwendung einer biaxialen Messvorrichtung (1), die einen Rahmen (2) zum Einspannen einer ebenen Probe (4) eines biege- und schubweichen Werkstoffs an vier Seiten und eine Vielzahl an Antrieben (3a, 3b) zur Aufbringung von Normal- und Schubspannungen auf die Probe (4) aufweist, wobei jeder Antrieb nur an einer der vier Seiten mit der Probe gekoppelt ist und die biaxiale Messvorrichtung (1) eine optische Messeinrichtung (5) aufweist, die mit einer Datenverarbeitungseinheit (6) operativ gekoppelt ist,
**umfassend die Schritte**

a) Aufbringen eines vordefinierten Zeichenrasters auf der ebene Probe (4), dessen Ausrichtung mit Orthotropie-Richtungen der Probe (4) korrelieren kann oder unregelmäßig ist, und Einspannen der Probe (4) entsprechend ihrer Orthotropie-Richtungen in den Rahmen (2),
b) Erfassen eines ersten Datensatzes, der die erste Position des Zeichenrasters beschreibt, mittels der optischen Messeinrichtung (5) und Senden der erfassten Daten an die Datenverarbeitungseinheit (6),
c) gleichzeitiges Anlegen von vorbestimmten Normal- und Schubspannungen an die Probe (4) mittels der Vielzahl an Antrieben (3a, 3b), dadurch Überführen der Probe (4) in einen verformten Zustand und Ändern der Position des Zeichenrasters,
d) Erfassen eines zweiten Datensatzes, der die zweite Position des Zeichenrasters beschreibt, mittels der optischen Messeinrichtung (5) und Senden des zweiten Datensatzes an die Datenverarbeitungseinheit (6),
e) Bestimmen einer relativen Positionsänderung des Zeichenrasters durch Korrelieren der erfassten ersten und zweiten Datensätze, und hieraus mittels der Datenverarbeitungseinheit (6) Bestimmen von Relativverschiebung und eines aktuellen Verzerrungszustandes der Probe (4),

f) aus den Verschiebung und dem aktuellen Verzerrungszustand der Probe (4) Bestimmen eines Verformungsgleichgewichts des verformten Zustands der Probe (4), wobei das Verformungsgleichgewicht mit den Werkstoffparametern korreliert, und

g) aus dem Verformungsgleichgewicht Berechnen und Ausgeben der Werkstoffparameter,

**dadurch gekennzeichnet, dass**

h) die Probe an jeder der vier Seiten mit jeweils mehreren der Antriebe (3a, 3b) gekoppelt ist sowie

i) in Schritt c) die Antriebe (3a, 3b) am Rahmen (2) auf jeder der vier Seiten voneinander getrennt verschiebbar sind, wobei die Probe nicht nur in zwei Richtungen gedehnt, sondern gleichzeitig auch in eine symmetrischen Verrautung oder einem unsymmetrischen Verzerrungszustand überführt wird.

2.  Verfahren nach Anspruch 1,
    **wobei**
    die in Schritt c) gleichzeitig angelegten Normal- und Schubspannungen zur Verformung der Probe (4) im nicht-linearen Bereich liegen, d.h. die Spannungs-Dehnungs-kennlinien weisen sich stetig ändernde Tangentensteigungen auf.

3.  Verfahren nach Anspruch 1 oder 2,
    **wobei**
    zum Bestimmen der ersten und/oder zweiten Position des Zeichenrasters Abstände zwischen drei vorbestimmten Punkten des Zeichenrasters erfasst werden, wobei die Punkte des Zeichenrasters mit Linien verbindbar sind und ein Winkel zwischen den Linien der Punkte des Zeichenrasters zu einer vorbestimmten X- und Y-Achse der Messvorrichtung (1) bestimmt werden.

4.  Verfahren nach zumindest einem der Ansprüche 1 bis 3,
    **umfassend den Schritt**
    g) wiederholtes Ausführen der Schritte b) bis f), dabei bei jeder Wiederholung Erhöhen oder Verringern der anzulegenden Schub- und Scherspannung.

5.  Biaxiale Messvorrichtung (1) zur Verwendung eines Verfahrens nach zumindest einem der Ansprüche 1 bis 4, wobei die biaxiale Messvorrichtung (1) einen Rahmen (2) zum Einspannen einer ebenen Probe (4) eines biege- und schubweichen Werkstoffs an vier Seiten und eine Vielzahl an Antrieben (3a,3b) zur Aufbringung von Spannungen auf die eingespannte Probe (4) aufweist, wobei jeder Antrieb nur an einer der vier Seiten mit der Probe gekoppelt ist und der biaxialen Messvorrichtung (1) eine optische Messeinrichtung (5) zugeordnet ist, die mit einer Datenverarbeitungseinheit (6) operativ gekoppelt ist,
    **dadurch gekennzeichnet, dass**

    a) die Probe an jeder der vier Seiten mit jeweils mehreren der Antriebe (3a, 3b) gekoppelt ist,

    b) die Antriebe (3a, 3b) am Rahmen (2) auf jeder der vier Seiten voneinander getrennt verschiebbar sind und

    c) mittels der Antriebe (3a,3b) vorbestimmte Normal- und Schubspannungen in Bezug auf die Orthotropie-Richtungen der Probe (4) gleichzeitig in normaler und paralleler Richtung an die eingespannte Probe (4) anlegbar sind.

6.  Messvorrichtung (1) nach Anspruch 5,
    **dadurch gekennzeichnet, dass**

    - der Rahmen (2) bevorzugt quadratisch ist, und dass

    - die Anzahl der Antriebe (3a, 3b) zumindest acht ist, wobei zumindest zwei Antriebe (3a, 3b) entlang einer Seitenkante des Rahmens (2) angeordnet sind und wobei zumindest einer der zumindest zwei Antriebe (3a, 3b) ein erster Spindelantrieb (3a) zur Erzeugung einer Schubspannung ist und zumindest ein weiterer Antrieb ein zweiter Spindelantrieb (3b) zur Erzeugung einer Scherspannung ist.

7.  Messvorrichtung (1) nach Anspruch 5 oder 6,
    **dadurch gekennzeichnet, dass**
    zum Anlegen einer gleichförmigen Normal- oder Schubspannung an die Probe (4) entlang einer vorbestimmten Orthotrophie-Richtung zumindest zwei Antriebe (3a, 3b) vorgesehen sind, die an voneinander abgewandten Seiten des Rahmens (2) angeordnet sind.

8. Messvorrichtung (1) nach zumindest einem der Ansprüche 5 bis 7
**dadurch gekennzeichnet, dass**
innerhalb des Rahmens (2) eine Schiene (7) angeordnet ist, in der ein Kantenabschnitt (10) der Probe (4) linear verschiebbar gelagert ist.

9. Messvorrichtung (1) nach zumindest einem der Ansprüche 5 bis 8,
**dadurch gekennzeichnet, dass**
die Messvorrichtung (1) zumindest eine Steuer- und Regelungseinheit (8) aufweist, die mit der Vielzahl an Antrieben (3a,3b) steuernd und/oder regelnd und mit der Datenverarbeitungseinheit (6) operativ gekoppelt ist.

10. Messvorrichtung (1) nach zumindest einem der Ansprüche 5 bis 9,
**dadurch gekennzeichnet, dass**
die Messvorrichtung (1) eine Aufhängevorrichtung mit einer Vielzahl an Laufschlitten (15a, 15b) aufweist, die mit einem Kantenabschnitt (10) der Probe (4) verbindbar sind.

11. Messvorrichtung (1) nach Ansprüche 8 und 10,
**dadurch gekennzeichnet, dass** die Aufhängevorrichtung zumindest drei Laufschlitten (15a, 15b) aufweist, die mit einem Kantenabschnitt (10) der Probe (4) verbindbar sind, wobei zumindest zwei der drei Laufschlitten (15a) auf einer Laufschiene (19) beweglich lagerbar sind und
zumindest einer der Laufschlitten (15b) mit der Schiene (7) fest verbindbar ist.

12. Messvorrichtung (1) nach Anspruch 11,
**dadurch gekennzeichnet, dass**
die Aufhängevorrichtung einen Keder (11) umfasst, um den ein Kantenabschnitt (10) der Probe (4) legbar ist und wobei der Keder (11) mit einem Befestigungsabschnitt (12) der Probe (4) unlösbar verbindbar, insbesondere verschweißbar, zu kleben oder zu nähen ist, und wobei die Aufhängevorrichtung zumindest drei Kederprofilblöcke (14) aufweist, die jeweils eine Ausnehmung (13) aufweisen, in der der ummantelbare Keder (11) zumindest abschnittsweise aufnehmbar ist, wobei die zumindest drei Kederprofilblöcke (14) mit den zumindest drei Laufschlitten (15) verbindbar sind.

13. Messanordnung umfassend eine Messvorrichtung (1) nach zumindest einem der Ansprüche 5 bis 10 und eine ebene Probe (4) eines biege- und schubweichen Werkstoffs
**dadurch gekennzeichnet, dass**
die Probe (4), die in die Messvorrichtung (1) einspannbar ist,

   - eine ebene Geometrie aufweist und/oder
   - ein auf der Oberfläche vorbestimmtes Zeichenraster zur optischen Erfassung von Verzerrungen aufgrund anlegbarer Normal- und Schubspannungen aus optisch erfassbaren Punkten aufweist, wobei eine Ausrichtung des Zeichenrasters mit Orthotropie-Richtungen der Probe (4) korreliert.

## Claims

1. Method for determining normal and shear stress-correlated material parameters, making use of a biaxial measuring device (1), which comprises a frame (2) for tensioning a flat sample (4) of a material which is soft under bending and shear forces on four sides, and a plurality of drive units (3a, 3b) for the imposition of normal and shear stresses onto the sample (4), wherein each drive unit is coupled to only one of the four sides of the sample, and the biaxial measuring device (1) comprises an optical measuring device (5), which is operatively connected to a data-processing unit (6),
**comprising the steps**

   a) applying a predefined character grid on the flat sample (4), of which the orientation can correlate with the orthotropic directions of the sample (4) or is irregular, and tensioning of the sample (4) corresponding to its orthotropic directions in the frame (2),
   b) detecting a first data set, which describes the first position of the character grid, by means of the optical measuring device (5) and sending of the detected data to the data-processing unit (6),

c) simultaneous imposing of predetermined normal and shear stresses onto the sample (4) by means of the plurality of drive units (3a, 3b), thereby transforming the sample (4) into a deformed state and changing the position of the character grid,

d) detecting a second data set, which describes the second position of the character set, by means of the optical measuring device (5) and sending of the second data set to the data-processing unit (6),

e) determining a relative position change of the character grid by correlating the detected first and second data sets, and from this, by means of the data-processing unit (6), determining the relative shear and a present distortion state of the sample (4),

f) from the shear and the present distortion state of the sample (4), determining of a deformation equilibrium of the deformed state of the sample (4), wherein the deformation equilibrium correlates to the material parameters, and

g) from the deformation equilibrium, calculating and issuing of the material parameters,

**characterised in that**

h) the sample is coupled on each of the four sides in each to several of the drive units (3a, 3b), and

i) in step c), the drive units (3a, 3b) at the frame (2) can be displaced on each of the four sides separately from one another, wherein the sample is extended not only in two directions, but is simultaneously also transformed into a symmetrical distorted rhomboid or an unsymmetrical distortion state.

2. Method according to claim 1,
**wherein**
the normal and shear stresses imposed simultaneously in step c) for the deformation of the sample (4) lie in the non-linear range, i.e. the stress-strain curves exhibit constantly changing tangent slopes.

3. Method according to claim 1 or 2,
**wherein**
for the determining of the first and/or second position of the character grid, distance intervals are detected between three predetermined points of the character grid, wherein the points of the character grid can be connected by lines, and an angle is determined between the lines of the points of the character grid in relation to a predetermined X-axis and Y-axis of the measuring device (1).

4. Method according to at least one of claims 1 to 3,
**comprising the step**
g) repeated performance of steps b) to f), and, in that situation, at each repetition an increase or reduction of the thrust and shear stress.

5. Biaxial measuring device (1) for using a method according to at least one of claims 1 to 4, wherein the biaxial measuring device (1) comprises a frame (2) for tensioning a flat sample (4) of a material which is soft under bending and shear forces on four sides, and a plurality of drive units (3a, 3b) for the imposition of normal and shear stresses onto the tensioned sample (4), wherein each drive unit is coupled to the sample on only one of the four sides, and allocated to the biaxial measuring device (1) is an optical measuring device (5), which is operatively coupled to a data-processing unit (6),
**characterised in that**

a) The sample is coupled on each of the four sides in each case to several of the drive units (3a, 3b),

b) the drive units (3a, 3b) at the frame (2) on each of the four sides can be displaced separately from one another, and

c) by means of the drive units (3a, 3b), predetermined normal and shear stresses can be imposed on the tensioned sample (4), in relation to the orthotropic directions of the sample (4) simultaneously in the normal and parallel directions.

6. Measuring device (1) according to claim 5,
**characterised in that**

- the frame (2) is preferably quadratic, and that
- the number of drive units (3a, 3b) is at least eight, wherein at least two drive units (3a, 3b) are arranged along one side edge of the frame (2), and wherein at least one of the at least two drives (3a, 3b) is a first spindle drive (3a) for creating a thrust stress, and at least one further drive is a second spindle drive (3b) for creating a shear stress.

7. Measuring device (1) according to claim 5 or 6,
   **characterised in that**
   in order to impose a uniform normal or shear stress on the sample (4) along a predetermined orthrotropic direction, at least two drive units (3a, 3b) are provided, which are arranged on sides of the frame (2) facing away from one another.

8. Measuring device (1) according to at least one of claims 5 to 7,
   **characterised in that**
   arranged inside the frame (2) is a rail (7), mounted on which is an edge section (10) of the sample (4) so as to be linearly displaceable.

9. Measuring device (1) according to at least one of claims 5 to 8,
   **characterised in that**
   the measuring device (1) comprises at least one controlling and regulating unit (8), which is operatively coupled to the plurality of drive units (3a, 3b) such as to control and/or regulate them, and also with the data-processing unit (6).

10. Measuring device (1) according to at least one of claims 5 to 9,
    **characterised in that**
    the measuring device (1) comprises a suspension device with a plurality of carriages (15a, 15b), which can be connected to an edge section (10) of the sample (4).

11. Measuring device (1) according to claims 8 and 10,
    **characterised in that** the suspension device comprises at least three carriages (15a, 15b), which can be connected to an edge section (10) of the sample (4), wherein at least two of the three carriages (15a) can be mounted such as to move on a running rail (19), and
    at least one of the carriages (15b) can be connected securely to the rail (7).

12. Measuring device (1) according to claim 11,
    **characterised in that**
    the suspension device comprises a beading strip (11), around which an edge section (10) of the sample (4) can be laid, and wherein the beading strip (11) can be non-detachably connected to a securing section (12) of the sample (4), in particular can be welded to it, adhesively bonded to it, or riveted to it, and wherein the suspension device comprises at least three beading profile blocks (14), which in each case exhibit a cut-out (13), in which the beading (11) which can be enclosed can be received at least in sections, wherein the at least three beading profile blocks (14) can be connected to the at least three carriages (15).

13. Measuring arrangement comprising a measuring device (1) according to at least one of claims 5 to 10, and a flat sample (4) of a material which is soft under bending and shear forces,
    **characterised in that**
    the sample (4), which can be tensioned into the measuring device (1),

    - exhibits a flat geometry and/or
    - on its surface, a predetermined character grid for the optical detection of distortions, on the basis of normal and shear stresses which can be imposed, formed of optically-detectable points, wherein an alignment of the character grid correlates with orthrotropic directions of the sample (4).

**Revendications**

1. Procédé pour déterminer des paramètres de matériaux corrélés aux contraintes normales et aux contraintes de cisaillement en utilisant un dispositif de mesure biaxial (1) comprenant un cadre (2) pour serrer un échantillon plan (4) d'un matériau souple en flexion et en cisaillement par quatre côtés et un ensemble de moyens d'entrainement (3a, 3b) pour appliquer des contraintes normales et de cisaillement à l'échantillon (4), chaque moyen d'entrainement étant couplé à l'un seulement des quatre côtés de l'échantillon et le dispositif de mesure biaxial (1) comporte une installation de mesure optique (5) couplée en coopération à une unité de traitement de données (6),
procédé comprenant les étapes consistant à :

a) appliquer une trame de signes prédéfinis à l'échantillon plan (4) dont l'orientation est corrélée aux directions orthotropes de l'échantillon (4) ou est irrégulier et serrer l'échantillon (4) en fonction de ses directions orthotropes dans le cadre (2),

b) saisir un premier jeu de données qui décrit la première position de la trame de signes à l'aide de l'installation de mesure optique (5) et envoyer les données saisies à l'unité de traitement de données (6),

c) appliquer en même temps des contraintes normales et de cisaillement prédéfinies à l'échantillon (4) à l'aide d'un ensemble d'entrainement (3a, 3b) pour faire passer l'échantillon (4) dans un état déformé et modifier la position de la trame de signes,

d) saisir un second jeu de données qui décrit la seconde position de la trame de signes à l'aide de l'installation de mesure optique (5) et envoyer le second jeu de données à l'unité de traitement de données (6),

e) déterminer une variation de position relative de la trame de signes en mettant en corrélation le premier et le second jeux de données saisies et déterminer ainsi à l'aide de l'unité de traitement de données (6) le glissement relatif et l'état de déformation actuel de l'échantillon (4),

f) à partir du glissement et de l'état de déformation actuel de l'échantillon (4), déterminer un équilibre de déformation de l'état déformé de l'échantillon (4),

* l'équilibre de déformation étant corrélé aux paramètres du matériau, et g) à partir de l'équilibre de déformation calculé et émettre les paramètres du matériau,
procédé **caractérisé en ce que**

h) plusieurs moyens d'entrainement (3a, 3b) respectifs sont couplés à chacun des quatre côtés de l'échantillon, et
i) dans l'étape (c) les moyens d'entrainement (3a, 3b) sont coulissés, séparément sur le cadre (2) l'un par rapport à l'autre sur chacun des quatre côtés,

* l'échantillon n'étant pas allongé seulement dans deux directions mais en même temps également il est mis en losange, symétrique ou dans un état de déformation asymétrique.

**2.** Procédé selon la revendication 1,
selon lequel
les contraintes normales et de cisaillement appliquées simultanément dans l'étape c) pour déformer l'échantillon (4) sont situées dans la plage non linéaire, c'est-à-dire que les caractéristiques tension-extension ont une pente de tangente variant en continu.

**3.** Procédé selon la revendication 1 ou 2,
selon lequel
pour déterminer la première et/ou la seconde position de la trame de signes, on saisit les distances entre trois points prédéfinis de la trame de signes,
les points de la trame de signes étant reliés par des lignes, et
on détermine un angle entre les lignes des points de la trame de signes par rapport à un axe X et un axe Y prédéfini du dispositif de mesure (1).

**4.** Procédé selon au moins l'une des revendications 1 à 3,
comprenant l'étape consistant à
g) exécuter de manière répétée les étapes b) - f) et à chaque répétition, augmenter ou diminuer les contraintes de poussée et de cisaillement appliquées.

**5.** Dispositif de mesure biaxial (1) appliquant le procédé selon au moins l'une des revendications 1 à 4,
le dispositif de mesure biaxial (1) comprenant un cadre (2) pour serrer un échantillon plan (4) d'un matériau souple en flexion et en cisaillement sur les quatre côtés et un ensemble de moyens d'entrainement (3a, 3b) pour appliquer des contraintes à l'échantillon (4) enserré,
* chaque moyen d'entrainement n'étant couplé qu'à l'un des quatre côtés de l'échantillon et le dispositif de mesure biaxial (1) est combiné à une installation de mesure optique (5) couplée de façon à coopérer avec une unité de traitement de données (6),
**caractérisé en ce que**

a) l'échantillon est couplé sur chacun des quatre côtés avec chaque fois plusieurs moyens d'entraînement (3a, 3b),

b) les moyens d'entraînement (3a, 3b) du cadre (2) sont coulissants séparément sur chacun des quatre côtés, et

c) à l'aide des moyens d'entrainement (3a, 3b), on applique des contraintes prédéfinies normales et de cisaillement par rapport aux directions orthotropes de l'échantillon (4), simultanément dans la direction normale et dans la direction parallèle à l'échantillon (4) encastré.

6. Dispositif de mesure (1) selon la revendication 5,
**caractérisé en ce que**

- le cadre (2) est de préférence carré, et
- le nombre de moyens d'entrainement (3a, 3b) est au moins égal à huit,

* au moins deux moyens d'entraînement (3a, 3b) étant prévus le long d'une arête latérale du cadre (2), et
* en même temps, l'un d'au moins deux moyens d'entrainement (3a, 3b) est un premier moyen d'entrainement à broche (3a) pour générer une contrainte de cisaillement et au moins un autre moyen d'entrainement est un second moyen d'entraînement à broche (3b) pour générer une contrainte de cisaillement.

7. Dispositif de mesure (1) selon la revendication 5 ou 6,
**caractérisé en ce qu'**il comprend :
au moins deux moyens d'entrainement (3a, 3b) sur les côtés opposés du cadre (2) pour appliquer une contrainte normale ou de cisaillement de même forme à l'échantillon (4), le long d'une direction orthotrope prédéfinie.

8. Dispositif de mesure (1) selon au moins l'une des revendications 5 à 7,
**caractérisé en ce que**
le cadre (2) est combiné à un rail (7) recevant en coulissement linéaire un segment d'arête (10) de l'échantillon (4).

9. Dispositif de mesure (1) selon au moins l'une des revendications 5 à 8,
**caractérisé en ce que**
le dispositif de mesure (1) comporte au moins une unité de commande et de régulation (8) couplée de façon à coopérer avec l'ensemble des moyens d'entrainement (3a, 3b) dans le sens de la commande et/ou de la régulation et de façon à coopérer avec l'unité de traitement (6).

10. Dispositif de mesure (1) selon au moins l'une des revendications 5 à 9,
**caractérisé en ce que**
le dispositif de mesure (1) comporte un dispositif de suspension comportant un ensemble de chariots (15a, 15b) qui peuvent être reliés à un segment d'arête (10) de l'échantillon (4).

11. Dispositif de mesure (1) selon les revendications 8 et 10,
**caractérisé en ce que**
le dispositif de suspension comporte au moins trois chariots (15, 15b) qui peuvent être reliés à un segment d'arête (10) de l'échantillon (4),

- au moins deux des trois chariots (15a) étant montés, mobiles sur un rail (19), et
- au moins l'un des chariots (15b) peut être relié solidairement au rail (7).

12. Dispositif de mesure (1) selon la revendication 11,
**caractérisé en ce que**

- le dispositif de suspension comporte un bourrelet (11) autour duquel est appliqué un segment d'arête (10) de l'échantillon (4), et
- le bourrelet (11) est relié solidairement à un segment de fixation (12) de l'échantillon (4), notamment par soudage pour être collé ou être cousu, et
- le dispositif de suspension comporte au moins trois blocs de profil en bourrelet (14) ayant chacun respectivement un évidemment (13) qui reçoit le bourrelet (11) enveloppé au moins par segment,
* au moins les trois blocs de profil en bourrelet (14) sont reliés à au moins trois chariots (15).

13. Installation de mesure comportant un dispositif de mesure (1) selon au moins l'une des revendications 5 à 10, et un échantillon (4) d'un matériau souple en flexion et en cisaillement,
installation **caractérisée en ce que**
l'échantillon (4) fixé dans le dispositif de mesure (1) a,

- une géométrie plane, et/ou
- une trame de signes prédéfinis sur sa surface pour la saisie optique des déformations par l'application de contraintes normales et de contraintes en cisaillement, se composant de points qui peuvent être saisis optiquement,

\* l'orientation de la trame de signes étant corrélée aux directions orthotropes de l'échantillon (4).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009020519 A1
- EP 2570791 A2
- US 7204160 B1
- WO 2012100780 A1

**In der Beschreibung aufgeführte Nicht-Patentliteratur**

- **QUAGLINI V. et al.** Experimental characterization of orthotropic technical textiles under uniaxial and biaxial loading. *Composites: Part A,* 2008, vol. 39, 1331-142